Europäisches Patentamt

European Patent Office

Office européen des brevets

(19)

(11) Veröffentlichungsnummer: **0 235 386 B1**

(12) # EUROPÄISCHE PATENTSCHRIFT

(45) Veröffentlichungstag der Patentschrift:
**10.01.90**

(51) Int. Cl.⁴: **G01G 17/04**

(21) Anmeldenummer: **86117670.9**

(22) Anmeldetag: **18.12.86**

(54) Anordnung und Verfahren zur Übernahme, Massenbestimmung und -abgrenzung von Fluessigkeiten, insbesondere Milch.

(30) Priorität: **20.12.85 DE 3545160**

(43) Veröffentlichungstag der Anmeldung:
**09.09.87 Patentblatt 87/37**

(45) Bekanntmachung des Hinweises auf die Patenterteilung:
**10.01.90 Patentblatt 90/2**

(84) Benannte Vertragsstaaten:
**AT ES FR GB NL**

(56) Entgegenhaltungen:
**DE-A- 2 345 894**
**DE-A- 2 613 708**
**DE-A- 2 942 211**
**DE-A- 3 125 899**
**DE-C- 294 741**
**FR-A- 2 329 984**
**GB-A- 2 151 801**
**US-A- 4 481 985**

(73) Patentinhaber: **OTTO TUCHENHAGEN GmbH & Co. KG,**
**Berliner Strasse 10 Postfach 1140, D-2059 Büchen(DE)**

(72) Erfinder: **Mieth, Hans Otto, Dipl.-Ing., Sandkrug 3,**
**D-2058 Schnakenbek/Elbe(DE)**

(74) Vertreter: **DIEHL GLAESER HILTL & PARTNER,**
**Patentanwälte Königstrasse 28,**
**D-2000 Hamburg 50(DE)**

## Beschreibung

Die Erfindung betrifft eine Anordnung zur Übernahme, Massenbestimmung und -abgrenzung von Flüssigkeiten, insbesondere Milch und ein Verfahren zur Anwendung der Anordnung nach dem Oberbegriff des Hauptanspruchs.

Eine Anordnung der einleitend gekennzeichneten Gattung ist aus der US–A 4 481 985 bekannt. Damit diese bekannte Anordnung einwandfreie Wiegeergebnisse liefern kann, ist der Meßbehälter derart innerhalb eines Rahmens abgestützt, daß er unter allen Betriebsbedingungen vertikal justiert bleibt. Die zum Meßbehälter führende Zulaufleitung für das fließfähige Material und eine Leitung, die den Meßbehälter mit einer Unterdruckquelle verbindet, sind permanent und nachgiebig an den Meßbehälter angeschlossen, so daß sich dieser unter der sich mit seiner Befüllung ändernden Gewichtskraft in einer Blattfederlagerung in vertikaler Richtung innerhalb des Rahmens verschieben kann.

Als Meßsystem versagt die bekannte Anordnung dann, wenn sich der Rahmen aufgrund verändernder Umgebungsbedingungen neigt, so daß die Meßbehälterlängsachse nicht mehr vertikal justiert ist. Die bekannte Anordnung ist daher als mobiles Meßsystem, wie es beispielsweise zur Übernahme, Massenbestimmung und -abgrenzung von Flüssigkeiten auf Fahrzeugen zum Einsatz gelangt, völlig ungeeignet.

Eine andere Anordnung, die der Anordnung der einleitend gekennzeichneten Gattung nahekommt, ist aus der DE 3 332 434 T1 bekannt. Sie stellt einen Versuch dar, beim Sammeln von Milch von Anlieferern in einen Milchtankwagen nicht, wie das bis heute die ausschließlich praktizierte Vorgehensweise ist, das Volumen der überführten Milchmenge, sondern direkt deren Masse zu bestimmen. Eine unmittelbare Massenbestimmung der überführten Milchmenge ist, falls es gelingt, sie mit der notwendigen Genauigkeit durchzuführen, in jedem Falle einer Volumenbestimmung überlegen, da sie ohne Rücksicht auf unvermeidbare Gasbeimengungen innerhalb der überführten Flüssigkeit durchführbar ist. Meßeinrichtungen zur Bestimmung des Volumens der überführten Flüssigkeit sind daher stets mit einer Vorrichtung zur Gasabscheidung auszustatten. Der unmittelbaren Bestimmung der Masse ist schon deshalb besondere Bedeutung beizumessen, da beispielsweise nach der Milchgüteverordnung die Milchmasse und nicht etwa das Volumen der überführten Milch dem Anlieferer vergütet wird. Die heutige Vergütungspraxis gestaltet sich derart, daß der Zusammenhang zwischen Masse und Volumen der überführten Milch über einen sogenannten Umrechnungsfaktor erfolgt. Dieser Umrechnungsfaktor ist nichts anderes als die Dichte der den Volumenzähler der Meßanlage durchströmenden Milch; er wird im wesentlichen von dem vorstehend erwähnten Gasabscheider bestimmt, ist in der Regel, abhängig vom Milcheinzugsgebiet, regional einheitlich festgelegt und stellt jenen Wert dar, der aufgrund des Standes der Technik auf diesem Gebiet mit durchschnittlichem technischem Aufwand und fachmännischem Sachverstand möglich ist.

Zwar beziehen sich die vorstehenden Hinweise zum Stand der Technik ausschließlich auf das angesprochene Problem im Zusammenhang mit der Milcherfassung, jedoch hat die Massebestimmung von zu überführenden Flüssigkeiten weitergreifendere und grundsätzliche Bedeutung. Überall dort nämlich, wo man sich in Ermangelung einer befriedigenden Verfahrenstechnik zur Bestimmung der Flüssigkeitsmasse bislang mit einer Bestimmung des Volumens zufrieden geben müßte, wobei man unterstellt, daß vollständig entgaste Flüssigkeit die Volumenmeßeinrichtung durchströmt, ist die nachfolgend vorgeschlagene erfindungsgemäße Anordnung zur Überführung, Massenbestimmung und -abgrenzung von Flüssigkeiten anwendbar.

Die aus der DE 3 332 434 T1 bekannte Anordnung und das mit ihr realisierbare Annahmeverfahren sind dazu allerdings nur begrenzt anwendbar. Die bekannte Anordnung ist dadurch gekennzeichnet, daß ein einziger Meßbehälter pendelnd aufgehängt ist. Dies erfordert einen Anschluß der zum Meßbehälter führenden Leitungen, der außerordentlich elastisch sein muß, damit während des Wiegens keinerlei Kraftwirkungen über die Leitungen auf den Meßbehälter auftreten. Die seitens der zuständigen Eichämter und der mit der Zulassung derartiger Systeme befaßten Physikalischen Technischen Bundesanstalt geforderte Meßgenauigkeit ist mit einem pendelnd aufgehängten Meßbehälter schwer oder überhaupt nicht zu realisieren. Abgesehen davon, daß eine derartige Anordnung außerordentlich aufwendig ist, ergeben sich verfahrenstechnische Mängel und Einschränkungen hinsichtlich des zeitlichen Ablaufs des gesamten Übernahmevorganges. Das Problem ist auch dadurch nicht lösbar, wie es die vorgenannte bekannte Anordnung vorschlägt, daß der Meßbehälter sehr groß gewählt wird, so daß die zu überführende Milchmenge insgesamt auf einmal in den Meßbehälter überführt werden kann. Zum einen steht der für eine derartige Maßnahme notwendige Raumbedarf nicht auf dem Fahrzeug zur Verfügung, zum anderen sind relativ kleine Anlieferungsmengen infolge des großen Gewichtes des leeren Meßbehälters nur mit nicht mehr tolerierbaren Meßfehlern zu erfassen.

Bei dem mit der vorgenannten bekannten Anordnung realisierbaren Verfahren wird die Flüssigkeit (hier Milch) eines Anlieferers in einen einzigen auf dem Tankwagen angeordneten Wiegetank gepumpt und gewogen. Anschließend wird die Milch während der Fahrt des Tankwagens zum nächsten Anlieferer in einen auf dem Tankwagen angeordneten Sammeltank gepumpt.

Das bekannte Verfahren ist nur bis zur vollständigen Befüllung des Wiegetanks mit Flüssigkeit ein kontinuierliches Verfahren. Darüber hinaus ist es ein diskontinuierliches Verfahren mit Pausen, deren Zeitdauer durch das Abpumpen der im Wiegetank gestapelten Flüssigkeit in den Sammeltank bestimmt

EP 0 235 386 B1

wird. Die als Vorteil bei dem bekannten Verfahren herausgestellte Zeitersparnis ist nur dann vorhanden, wenn die Entleerung des Wiegetanks in Sammeltanks während der Fahrt zum nächsten Anlieferer erfolgt. Befinden sich jedoch die Behältnisse mehrerer Anlieferer an gleicher Stelle, so ist diese Zeitersparnis nicht mehr vorhanden, falls die Liefermengen voneinander räumlich getrennt erfaßt werden sollen. Übersteigen die anzuliefernden Milchmengen mehrerer Anlieferer an gleicher Stelle das Fassungsvermögen des Wiegetanks, dann wird das vorstehend angedeutete Zeitproblem bei diesem diskontinuierlich betreibbaren Chargenverfahren offenkundig.

Hier schafft nun die erfindungsgemäße Anordnung Abhilfe, der die Aufgabe zugrunde liegt, den Meßbehälter so anzuordnen, daß er während des Wiegens über die an ihm angeschlossenen Leitungen keinerlei das Meßergebnis verfälschende Kraftwirkungen erfährt. Darüber hinaus soll verfahrensmäßig sichergestellt werden, daß das Meßsystem zur Bestimmung der überführten Flüssigkeitsmasse quasikontinuierlich beschickt und notwendigenfalls auch quasikontinuierlich entleert werden kann.

Diese Aufgabe wird nach den Merkmalen des Kennzeichens des Anspruchs 1 und Anspruchs 15 gelöst.

Vorteilhafte Ausgestaltungen der erfindungsgemäßen Anordnung sind in den abhängigen Ansprüchen beschrieben.

Gemäß der vorliegenden Erfindung ist der Meßbehälter sozusagen über die Stützfläche, den Rahmen mit seinen Lagern, gefesselt, so daß er jegliche räumliche Neigungsbewegung des gesamten Meß- und Annahmesystems mitvollzieht. Es ist also gleichgültig, ob das gesamte Fahrzeug waagerecht oder in irgendeiner Richtung des Raumes geneigt ist. Die gesamte Anordnung, einschließlich des Sammeltanks, der Meßbehälter und aller Leitungsverbindungen erfährt gegebenenfalls aufgrund der Umgebungsbedingungen eine räumliche Schräglage. Ein Auspendeln der Meßbehälter wird nicht mehr zugelassen. Dadurch entfällt die hochgradig elastische Leitungsverbindung zu den Meßbehältern, die bei Anordnungen nach dem Stand der Technik unabdingbar sind. Lediglich die geringen Absenkbewegungen der Meßbehälter beim Belasten der Wiegezellen, die im Zehntelmillimeterbereich liegen, sind durch geeignet elastische Leitungsanschlüsse sicherzustellen. Über die erfindungsgemäße Anordnung der Wiegezelle im Bezug auf die Stützfläche bzw. den Rahmen wird eine sogenannte Hangabtriebskraft gemessen, die allenfalls durch minimale Reibungskräfte in der Lagerung des Meßbehälters verfälscht sein kann. Diese Reibungskräfte lassen sich im Rahmen der tolerierbaren Meßfehler minimieren, bzw. sie sind über die Auswerteeinrichtung als sogenannte Gerätekonstante zu berücksichtigen.

Durch Messung des Neigungswinkels der Lagerungsachse des Meßbehälters kann aus der in Richtung der Lagerungsachse wirksamen und gemessenen Hangabtriebskraft (Kraftkomponente $F_H^*$ der Gewichtskraft F) die tatsächlich vorhandene Gewichtskraft F berechnet werden.

Eine andere vorteilhafte Ausführungsform der Anordnung gemäß der Erfindung sieht vor, mittels einer über die Meßeinrichtung zur Bestimmung des Neigungswinkels in Verbindung mit einem Meßwertumformer steuerbaren Verstelleinrichtung, den Meßbehälter senkrecht zu justieren, so daß die an der Wiegezelle angreifende Kraft unmittelbar der tatsächlich vorhandenen Gewichtskraft des Meßbehälters entspricht.

Ist der Meßbehälter innerhalb des Rahmens in Richtung seiner Lagerungsachse nur im Zehntelmillimeterbereich verschiebbar, so kann, nach einer weiteren Ausführungsform der Anordnung, der Rahmen selbst mit der Gesamtanordnung und dem Fahrgestell des Fahrzeuges im wesentlichen ohne eigene Bewegungsfreiheitsgrade verbunden sein. Begrenzte Beweglichkeit des Rahmens gegenüber der Gesamtanordnung oder dem Fahrgestell ist demgegenüber dann angezeigt, wenn es erforderlich sein sollte, aus Gründen der Schwingungsdämpfung Meßbehälter und Wiegezelle schwingungstechnisch von ihrer Umgebung zu trennen.

Da die an den Meßbehälter herangeführten Leitungen sich zunächst am Rahmen abstützen, ergibt die Beweglichkeit des Rahmens und die dadurch von den Leitungen hervorgerufenen Kraftwirkungen keinerlei Kraftwirkung auf den Meßbehälter. Selbstverständlich sind die Leitungen unter Zwischenschaltung eines elastischen Rohrleitungsabschnittes am Rahmen befestigt.

Die Lagerung des Meßbehälters selbst erfolgt entweder über Wälzkörperlagerung, oder aber über biegeweiche Membranen, die senkrecht zur Lagerungsachse aufgespannt und in dieser Richtung außerordentlich steif sind. Für die letztgenannte Lagerungsvariante spricht deren geringe Anfälligkeit gegen Korrosion und die Tatsache, daß kein nennenswerter Wartungsaufwand erforderlich ist.

Um den Neigungswinkel der Anordnung gemäß der Erfindung zu bestimmen, ist gemäß einer vorteilhaften Ausführungsform vorgesehen, daß eine Referenzmasse, die adäquat zum Meßbehälter gelagert ist, an einer Wiegezelle angreift. Über das Verhältnis aus der Hangabtriebskraft und der tatsächlichen Gewichtskraft der Referenzmasse läßt sich die Gewichtskraft des Meßbehälters auf einfachste Weise aus der an der Wiegezelle des Meßbehälters angreifenden Hangabtriebskraft errechnen. Ein Umweg über den tatsächlichen Neigungswinkel ist im Rahmen dieser Berechnung nicht mehr notwendig. In dem Maße, wie die Hangabtriebskraft der Referenzmasse durch Neigung reduziert wird, wird auch die Hangabtriebskraft des Meßbehälters erniedrigt.

Eine andere vorteilhafte Ausführungsform der Anordnung gemäß der Erfindung sieht vor, daß die Meßeinrichtung zur Bestimmung des Neigungswinkels eine über eine Achse drehbar gelagerte Scheibe aufweist, die an ihrem Umfang mit einer Unwucht ausgestattet ist, und bei der eine pendelnd aufgehängte Masse ein dem Neigungswinkel gegenüber der Senkrechten proportionales Signal erzeugt.

3

Da die Unwucht der Scheibe immer deren tiefste Schwerpunktslage einstellt, ist der Auslenkungswinkel der pendelnd aufgehängten Masse in seinem Betrag gleich dem räumlichen Neigungswinkel der Lagerungsachse. Auf diese Weise gelingt es sehr einfach, mit einem einzigen Meßgerät eine Raumwinkelmessung vorzunehmen.

Aus Gründen der Schwingungsdämpfung und Abschirmung der empfindlichen Wiegezelle gegen Erschütterungen und Schwingungen von außen ist es vorteilhaft, wenn nach einer weiteren Ausführungsform der Anordnung gemäß der Erfindung der Rahmen, in dem der Meßbehälter gelagert ist, auf Feder-/Dämpfungs-Elementen ruht. Durch geeignete Auswahl und Bemessung dieser Elemente gelingt es fast immer, Resonanzerscheinungen zwischen den anregenden Schwingungen von außen und der Eigenfrequenz des Systems zu vermeiden.

Eine vorteilhafte Ausgestaltung der Anordnung gemäß der Erfinung ermöglicht die Massenbestimmung der im Meßbehälter vorhandenen Flüssigkeit durch Anschluß des Meßbehälters an wenigstens eine Wiegezelle.

Nach einer anderen Ausgestaltung der Anordnung gemäß der Erfindung sind alle Meßbehälter eines Meßsystems an eine Wiegezelle über eine Aufhängung in Verbindung mit einer Arretiervorrichtung anschließbar. Durch Anheben und arretieren der Meßbehälter, die nicht gewogen werden sollen, wird die einzige vorhandene Wiegezelle allein durch den zu wiegenden Meßbehälter belastet.

Durch eine geeignete Aufhängung der Meßbehälter und eine steuerbare Arretiervorrichtung wird eine zyklische Reihenfolge bei der Wägung der Meßbehälter sichergestellt.

Es versteht sich, daß die im Zusammenhang mit der Massenbestimmung der Flüssigkeit durch Wägung vorgeschlagenen Anordnungen realisierbar sind, gleichgültig, ob der Meßbehältr an der Wiegezelle hängt, oder sich auf dieser abstützt.

Eine andere Weiterbildung der Anordnung gemäß der Erfindung sieht einen dem letzten Meßbehälter nachgeordneten Gasabscheider und/oder Windkessel vor, in den die Ablaufleitung einmündet und aus dem eine Überführungsleitung ausmündet. Die Ausgestaltung der vorstehend genannten zusätzlichen Komponente als Windkessel ist überall dort von Vorteil, wo nachgeschaltete Prozeßanlagen (beispielsweise Wärmetauscher, Filter, Separatoren) in besonderer Weise auf stetigen Durchsatz mit einem tolerierbaren Ungleichförmigkeitsgrad ausgelegt und angewiesen sind. Außerdem ist diese Eigenschaft besonders wichtig bei der Entnahme von Flüssigkeitsproben aus der Überführungsleitung hinter den Meßbehältern. Die Ausgestaltung der vorgenannten Komponente als Gasabscheider ist dann von Vorteil, wenn technologische Belange im Zusammenhang mit dem Betrieb der Prozeßanlage dieses erfordern. Dieser technologische Belang ist beispielsweise dann gegeben, wenn durch Gasgehalt in der Flüssigkeit bei Erhitzungsvorgängen derselben eine Produktschädigung auftritt.

Bei einer Meßeinrichtung mit wenigstens drei Meßbehältern ist innerhalb der Ablaufleitung hinter dem letzten Meßbehälter eine quasikontinuierliche Strömung sichergestellt. Dieser Zustand ist insbesondere dann von Vorteil, wenn eine Probenentnahme über eine Mengenteilereinrichtung mit Hilfe eines Pitotrohrs durchgeführt werden soll. Die Anordnung eines Windkessels vor der Probenentnahmeneinrichtung zwischen Ablaufleitung und Überführungsleitung verbessert zusätzlich die Bedingungen für eine Probenentnahme. Die Probenentnahme selbst kann gemäß einer vorteilhaften Ausführungsform der Anordnung entweder in der Zulaufleitung oder in der Ablaufleitung oder der Überführungsleitung durchgeführt werden.

Nach einer weiteren vorteilhaften Ausgestaltung der Anordnung gemäß der Erfindung ist eine Unterdruckquelle einerseits saugseitig über eine Saugleitung, einen zugeordneten Leitungsabschnitt und ein steuerbares Ventil und andererseits druckseitig über eine Druckleitung, einen zugeordneten Druckleitungs-Abschnitt und ein weiteres steuerbares Ventil an die Meßbehälter angeschlossen. Eine andere Ausgestaltung der Anordnung gemäß der Erfindung sieht vor, daß die Meßbehälter jeweils mit einem druckgesteuerten Be-und Entlüftungsventil versehen sind, und daß den Meßbehältern eine erste Fördereinrichtung innerhalb der Zulaufleitung vor-und eine zweite Fördereinrichtung innerhalb der Ablaufleitung nachgeschaltet sind.

Die erstgenannte Ausführungsform der Anordnung ermöglicht die Beschickung des Meßsystems mit Flüssigkeit durch Evakuierung der Meßbehälter. Die Entleerung des Meßsystems erfolgt durch Austreibung der Flüssigkeit mit Hilfe des auf der Druckseite der Unterdruckquelle anfallenden Gasüberdruckes. Die an zweiter Stelle genannte Anordnung stellt ein sogenanntes Pumpensystem dar, wobei das Meßsystem zulaufseitig über eine geeignete Fördereinrichtung beschickt und ablaufseitig über eine weitere geeignete Fördereinrichtung entleert wird. Das erstgenannte sogenannte Vakuumsystem kommt dann in besonderer Weise zum Tragen, wenn das Meßsystem im Hinblick auf eine einwandfreie Mengenabgrenzung der Flüssigkeitsmengen der verschiedenen Lieferanten weitestgehend von Flüssigkeitsresten befreit werden muß. Das sogenannte Pumpensystem hat den Vorteil, daß die Meßbehälter praktisch drucklos betrieben werden können, und daß keine Zeitverluste für Druckwechselvorgänge auftreten.

Es ist auch eine Kombination der vorgenannten Anordnung möglich. Dabei dient die Unterdruckquelle der Evakuierung des Meßbehälters, so daß dieser gemäß der vorstehend erläuterten Vakuumanordnung befüllt werden kann. Die Entleerung des Meßbehälters erfolgt über eine in der Ablaufleitung angeordnete Fördereinrichtung; die Druckleitung kann entfallen. Die Meßbehälter müssen lediglich in ihrer Entleerungsphase über ein Belüftungsventil, beispielsweise aus der Atmosphäre, belüftbar sein.

Eine andere Ausgestaltung der Anordnung gemäß der Erfindung sieht vor, daß der Meßbehälter in seinem oberen und unteren Bereich jeweils mit einer den Flüssigkeitsstand meldenden Sonde ausgestattet ist. Dadurch kann in einfacher Weise die Reihenfolge bei der wechselweisen oder zyklischen Befüllung und Entleerung der Meßbehälter realisiert werden. Darüber hinaus bietet die untere Sonde die Möglichkeit, auf eine vollständige Entleerung des Meßbehälters zu verzichten und den Entleerungsvorgang bei Erreichen der unteren Sonde abzubrechen. Zum einen wird dadurch verhindert, daß die dem Meßbehälter nachgeschaltete Pumpe Luft saugt, zum anderen ist das vollständige Entleeren des Meßbehälters nur dann sinnvoll, wenn auf eine Verwiegung des leeren Behälters verzichtet d.h. wenn das Tara-Gewicht des Behälters zur Berechnung herangezogen werden kann. Dies geht aber mit ausreichender Genauigkeit nur dann, wenn sich der Meßbehälter vollständig entleert hat. In der Regel steht aber diese Zeit, die bei viskosen oder hochviskosen Flüssigkeiten sehr lang sein kann, nicht zur Verfügung.

Eine vorteilhafte Ausgestaltung eines Verfahrens mittels einer Anordnung gemäß der Erfindung sieht vor, daß mit der zu überführenden Flüssigkeit ein mit wenigstens zwei Meßbehältern ausgestattetes Meßsystem derart beschickt wird, daß die Meßbehälter wechselweise bzw. in zyklischer Reihenfolge befüllt, entleert oder teilentleert werden, wobei die Befüllungsphasen F um die halbe bzw. ein Drittel der Zykluszeit $t_z$ gegeneinander versetzt sind und ohne Unterbrechung ineinander übergehen, und daß die Masse des befüllten und entleerten oder teilentleerten Meßbehälters bestimmt wird. Durch eine derartige verfahrenstechnische Kombination werden einerseits die Vorteile der erfindungsgemäßen Anordnung genutzt, andererseits werden die bislang bei der Anwendung von Wiegesystemen auftretenden zeitlichen Probleme, hervorgerufen durch die diskontinuierliche Betriebsweise, überwunden.

Die erfindungsgemäße Anordnung wird anhand von Ausführungsbeispielen in den nachfolgend erläuterten Figuren der Zeichnung im einzelnen näher beschrieben.

Es zeigen

Figur 1 eine Anordnung gemäß der Erfindung in schematischer Darstellung, wobei die Befüllung und Entleerung der Meßbehälter über eine dem Meßsystem vor- und eine nachgeschaltete Fördereinrichtung durchführbar ist;

Figur 1a eine Abwandlung der Anordnung gemäß Figur 1 mit einer über eine Meßeinrichtung gesteuerten Verstelleinrichtung;

Figur 2 eine die erfindungsgemäße Anordnung stark abstrahierende Skizze zur Erläuterung des vorliegenden Kräftespiels;

Figur 3 eine Ausführungsform der Meßeinrichtung zur Bestimmung des räumlichen Neigungswinkels der erfindungsgemäßen Anordnung;

Fig. 4,4a Lagerungsvarianten der Anordnung gemäß der Erfindung;

Figur 5 eine weitere Anordnung gemäß der Erfindung in schematischer Darstellung, wobei die beiden Meßbehälter an einer Wiegezelle angreifen;

Figur 5a den Belastungsfall in schematischen Darstellung für die Wiegezelle nach der Anordnung gemäß Figur 5;

Figur 6 eine weitere Ausgestaltung einer Anordnung gemäß der Erfindung mit drei Meßbehältern;

Figur 6a, 6b, 6c die Belastungsfälle in schematischer Darstellung für die Wiegezelle nach der Anordnung gemäß Figur 6;

Figur 7 eine Anordnung gemäß der Erfindung in schematischer Darstellung, wobei eine Unterdruckquelle für die Befüllung und Entleerung der Meßbehälter vorgesehen ist;

Figur 8 eine weitere erfindungsgemäße Anordnung in schematischer Darstellung, wobei die Befüllung und Entleerung der Meßbehälter über eine dem Meßsystem vor- und eine nachgeschaltete Fördereinrichtung durchführbar ist;

Figur 9 ein Ablaufdiagramm für ein Verfahren mittels einer erfindungsgemäßen Anordnung, wobei ein Meßsystem mit zwei Meßbehältern vorgesehen ist und

Figur 10 ein Ablaufdiagramm für ein Meßsystem mit drei Meßbehältern.

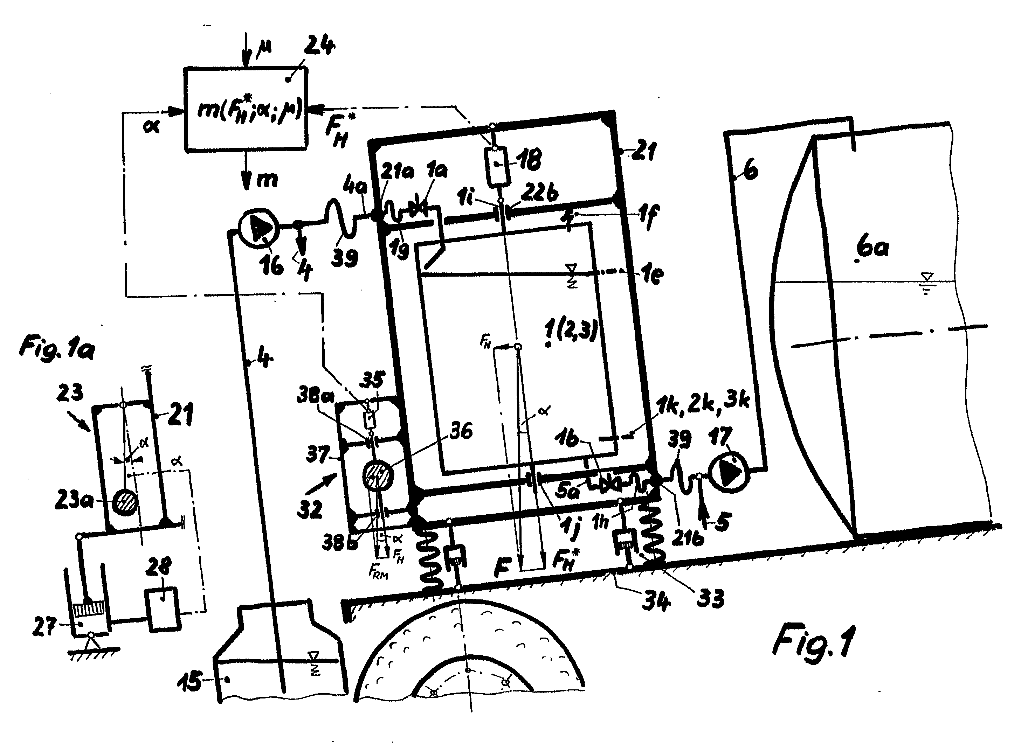

Ein Meßbehälter 1 (Figur 1) ist über einen oberen und einen unteren Lagerzapfen 1i bzw. 1j in einem Rahmen 21 mittels Radiallager 22a, 22b gelagert. In Richtung seine Lagerungsachse weist der Meßbehälter 1 einen Verschiebefreiheitsgrad auf. Die in Richtung der Lagerungsachse wirkende Kraftkomponente $F_H^*$ der Gewichtskraft F greift an einer Wiegezelle 18 an und wird dort gemessen.

Der Meßwert $F_H^*$ wird einer Auswerteeinrichtung 24 übermittelt. In einer Zulaufleitung 4 ist eine erste Fördereinrichtung 16 angeordnet, mit der Flüssigkeit, insbesondere Milch, aus einem Anlieferungsbehälter 15 in den Meßbehälter 1 gefördert wird. Hinter der ersten Fördereinrichtung 16 verzweigt sich die Zulaufleitung 4 gegebenenfalls in mehrere Zulaufleitungsabschnitte, von denen der Zulaufleitungsabschnitt 4a am Meßbehälter 1 dargestellt ist. Der Zulaufleitungsabschnitt 4a ist am Rahmen 21 an der Stelle 21a befestigt. Dadurch werden Kraftwirkungen von der Zulaufleitung 4 oder dem Zulaufleitungsabschnitt 4a auf den Meßbehälter 1 verhindert. Ein elastischer Rohrleitungsabschnitt 39 erlaubt eine Beweglichkeit des Rahmens 21 innerhalb der Gesamtanordnung. Die gleichen Vorkehrungen sind hinsichtlich des Ablaufleitungsabschnitts 5a, der in die Ablaufleitung 5 einmündet und über eine zweite Fördereinrichtung 17 und eine nachgeordnete Überführungsleitung 6 in einen Sammeltank 6a führt, vorgesehen. Der Ablaufleitungsabschnitt 5a ist an der Stelle 21b am Rahmen 21 befestigt. Damit der Meßbehälter kraftwirkungsfrei an die Wiegezelle 18 angeschlossen werden kann, sind im Zulauf- und Ablaufleitungsabschnitt 4a bzw. 5a innerhalb des Rahmens 21 elastische Rohrleitungsabschnitte 1g bzw. 1h vorgesehen. Zur Befüllung und Entleerung des Meßbehälters dienen steuerbare Ventile 1a bzw. 1b. In seinem oberen und unteren Bereich weist der Meßhälter 1 jeweils eine Niveausonde 1e bzw. 1k auf. Mit diesen oder über die Anzeige der Wiegezelle 18 läßt sich die Befüllung und Entleerung des Meßbehälters 1 steuern.

Für den Druckausgleich bei der Entleerung oder der Befüllung des Meßbehälters 1 sorgt ein Druck- und Entlüftungsventil 1f.

Der Rahmen 21 stützt sich über Feder-/Dämpfungs-Elemente 33 auf einem Fahrgestell 34 ab. Am Rahmen 21 ist eine Meßeinrichtung 32 angeordnet, die seine räumliche Neigungsbewegung mitvollzieht. Innerhalb der Meßeinrichtung 32 befindet sich eine Referenzmasse 36, die adäquat zum Meßbehälter 1 innerhalb eines Rahmens 37 über Lager 38a und 38b gelagert ist und an einer Wiegezelle 35 angreift. Da die Gewichtskraft $F_{RM}$ der Referenzmasse 36 bekannt ist, läßt sich über die an der Wiegezelle 35 gemessene Hangabtriebskraft $F_H$ einerseits der räumliche Neigungswinkel $\alpha$ des Rahmens 21 und damit des Meßbehälters 1 und andererseits die tatsächliche Gewichtskraft $F$ des Meßbehälters 1 ermitteln, wenn dessen an der Wiegezelle 18 angreifende Hangabtriebskraft $F_H^*$ gemessen wird.

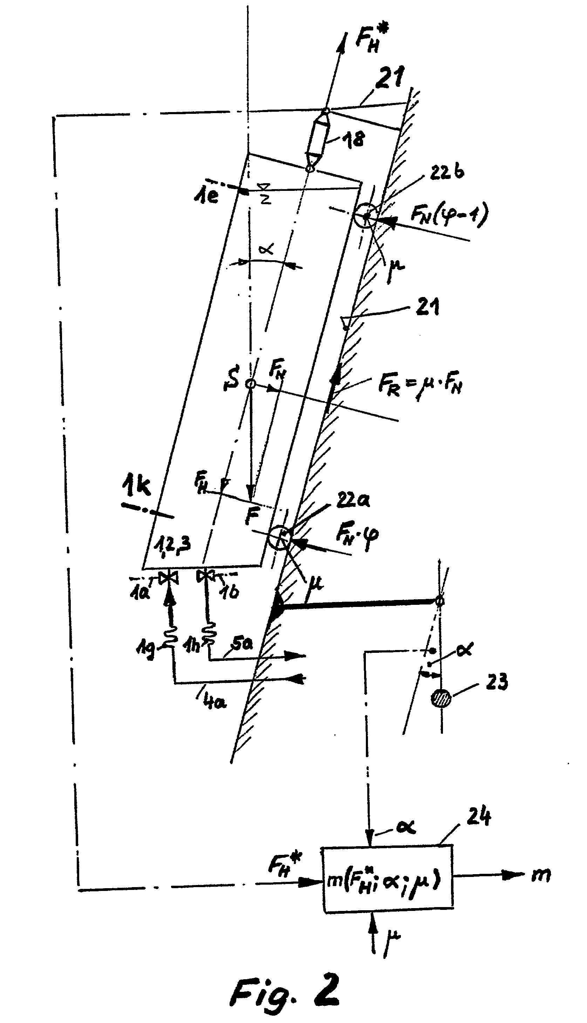

Mit der unter der Beschreibung zu Figur 2 angegebenen Beziehung für die Gewichtskraft $F$ des Meßbehälters 1 (siehe Gleichung 1) stellt sich die seitens der Auswerteeinrichtung 24 im Hinblick auf die Ermittlung der Masse des Meßbehälters 1 notwendige Berechnung wie folgt dar: der Kosinus des Neigungswinkels $\alpha$ ist der Quotient aus der an der Wiegezelle 35 (WZ 2) angreifenden Hangabtriebskraft $F_H$ und der Gewichtskraft $F_{RM}$ der Referenzmasse 36:

$$Cos\alpha = F_H(WZ2)/F_{RM} = A(WZ2) \quad (2).$$

Ersetzt man in Gleichung 1 den Sinus des Winkels $\alpha$ durch seinen Kosinus, so erhält man:

$$m = F/g = F_H^* (WZ1)/g/(Cos\alpha - \mu\sqrt{(1-cos^2\alpha)}) \quad (1a)$$

Setzt man Gleichung (2) in Gleichung (1a) ein, so erhält man für die Masse m des Meßbehälters 1 folgende Beziehung:

$$m = F_H^* (WZ1)/g/(A(WZ2) - \mu\sqrt{(1-A^2(WZ2))}). \quad (1b)$$

Man erkennt, daß die Masse m des Meßbehälters 1 ermittelt werden kann, wenn der Auswerteeinrichtung 24 die Hangabtriebskraft $F_H^*$, gemessen an der Wiegezelle 18 (WZ 1), der Kosinus des Neigungswinkels $\alpha$ (gemessen über die Meßeinrichtung 32) und der Reibungskoeffizient $\mu$ der Meßbehälter-Lagerung übermittelt werden. Bei hinreichend reibungsarmer Lagerung kann $\mu$ vernachlässigt werden, oder aber $\mu$ geht als Gerätekonstante in die Rechnung ein.

Eine andere Möglichkeit der Neigungswinkelbestimmung und -verarbeitung zeigt Figur 1a. Eine Meßeinrichtung 23 weist eine pendelnd aufgehängte Masse 23a auf, die ein dem Neigungswinkel $\alpha$ proportionales Signal erzeugt. Aus dem Winkelsignal kann der Kosinus des Winkels ermittelt werden, so daß über Gleichung (1a) eine Bestimmung der Masse des Meßbehälters 1 über die Auswerteeinrichtung 24, wie vorstehend bereits beschrieben, möglich ist. Figur 1a zeigt darüber hinaus eine weitere Möglichkeit, die Gewichtskraft $F$ des Meßbehälters 1 unmittelbar zu ermitteln. Zu diesem Zweck wird das Winkelsignal einem Meßwertumformer 28 zugeführt, der den ermittelten Winkelwert $\alpha$ in eine geeignete Stellgröße für eine Verstelleinrichtung 27 umsetzt. Die Verstelleinrichtung 27 greift im Bodenbereich des Meßbehälters 1 an und ist in der Lage letzteren exakt senkrecht zu justieren. Sobald der Meßbehälter 1 senkrecht justiert ist, läßt sich über die Wiegezelle 18 seine Gewichtskraft $F$ unmittelbar ohne weitere Berechnung ermitteln.

Die Figur 2 zeigt einen Meßbehälter 1, 2, 3, der sich jeweils auf einer um einen Neigungswinkel $\alpha$ gegenüber der Senkrechten geneigten Stützfläche (Rahmen) 21 abstützt, wobei die Stützfläche 21 parallel zur Wirkungslinie (Lagerungsachse des Meßbehälters) der die Wiegezelle 18 beaufschlagenden Komponente der Gewichtskraft $F$ des Meßbehälters 1, 2, 3 verläuft. Zur Verminderung der Reibung zwischen Meßbehälter 1, 2, 3 und Stützfläche 21 sind Wälzkörperlagerungen 22a, 22b vorgesehen, wobei die Lager in axialer Richtung des Meßbehälters 1, 2, 3 gesehen einen Abstand voneinander haben. Der Zulaufleitungsabschnitt 4a ist über den elastischen Rohrleitungsabschnitt 1g in Verbindung mit dem steuerbaren Ventil 1a an dem Meßbehälter 1, 2, 3 angeschlossen. Das gleiche gilt für den Ablaufleitungsabschnitt 5a in Verbindung mit dem elastischen Rohrleitungsabschnitt 1h und dem steuerbaren Ventil 1b. Unabhängig von dem Neigungswinkel $\alpha$ der Stützfläche 21 läßt sich der Meßbehälter 1, 2, 3 bis zu einem durch die Niveausonde 1e festgelegten Füllstand befüllen. Durch eine Meßeinrichtung 23 zur Bestimmung des Nei-

gungswinkels ± α, die mit der Stützfläche 21 in Verbindung steht, kann die Lageabweichung des gesamten Meßsystems gegenüber der Normalstellung ermittelt werden. Der gemessene Wert für den Neigungswinkel ± α wird einer Auswerteeinrichtung 24 zugeführt, in den außerdem die über die Wiegezelle 18 gemessene Komponente der Gewichtskraft F des Meßbehälters 1, 2, 3 und der Reibungskoeffizient an den Walzkörpern 22a, 22b zwischen dem Meßbehälter 1, 2, 3 und Stützfläche 21 verarbeitet werden. Durch den in praxi relativ kleinen Neigungswinkel α sind die Normalkraftanteile $F_{N\varphi}$ bzw. $F_N(\varphi-1)$ relativ klein. Entsprechend klein ist auch die daraus resultierende Reibungskraft $F_R = \mu \, F_N$.

Das Verhältnis der Normalkraftanteile an den Wälzkörpern 22a, 22b wechselt in Abhängigkeit vom Füllstand der Flüssigkeit im Meßbehälter 1, 2, 3.

Die resultierende Reibungskraft $F_R$ wirkt der Hangabtriebskraft $F_H$ aus der Gewichtskraft F entgegen. Somit wird an der Wiegezelle 18 eine Kraft $F_H^* = F_H - F_R$ wirksam. Sowohl die Hangabtriebskraft $F_H$ als auch die Normalkraft $F_N$ sind in Abhängigkeit vom Neigungswinkel ± α leicht rechnerisch zu ermitteln. Über die intelligente Auswerteeinrichtung 24 kann somit aus der gemessenen Hangabtriebskraft $F_H^*$ die um den Einfluß der Reibungskraft $F_R$ korrigierte Gewichtskraft F der Flüssigkeit im Meßbehälter 1, 2, 3 berechnet werden:

$$F = F_H^* / (\cos \alpha - \mu \sin \alpha) \qquad (1).$$

Die vorgeschlagene Anordnung bietet Vorteile, da weder eine aufwendige kardanische Aufhängung des Meßbehälters 1, 2, 3 noch ein besonders aufwendiger elastischer Anschluß der in den Meßbehälter 1, 2, 3 hineingeführten Leitungen notwendig ist. Lediglich die äußerst geringen Verschiebungen des Meßbehälters 1, 2, 3 in Richtung der parallel zur Stützfläche (Lagerung) 21 verlaufenden Wirkungslinie der Hangabtriebskraft $F_H$ bzw. $F_H^*$ müssen kraftwirkungsfrei durch die angeschlossenen Leitungsabschnitte 4a, 5a aufgenommen werden.

Im allgemeinsten Fall ist die Stützfläche (Lagerachse) 21 des Meßbehälters um den Winkel α räumlich beliebig gegenüber der Senkrechten geneigt. Die Meßeinrichtung 23 erfaßt die Abweichung von der senkrechten über den räumlichen Neigungswinkel ± α und führt diesen der Auswerteeinriohtung 24 zu. Die Korrektur der durch die Wiegezelle 18 gemessenen Hangabtriebskraft $F_H^*$ erfolgt in der vorstehend bereits erläuterten Weise.

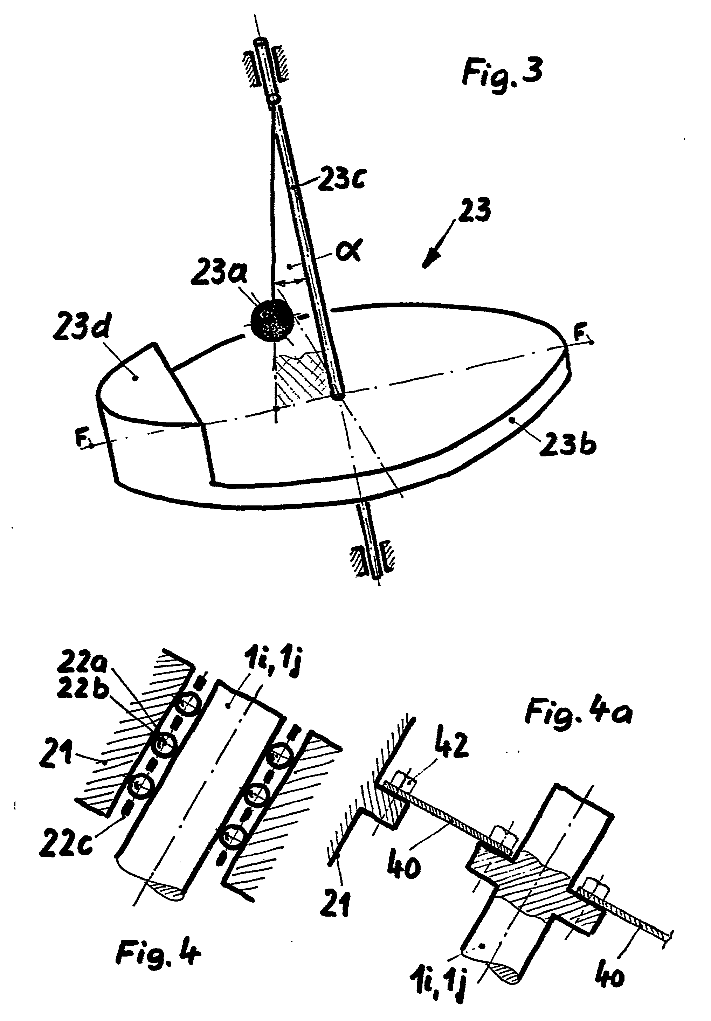

Eine vorteilhafte Ausführungsform einer im Zusammenhang mit der Anordnung gemäß der Erfindung einsetzbaren Meßeinrichtung 23 ist in Figur 3 dargestellt. Sie weist eine über eine Achse 23c drehbar gelagerte Scheibe 23b auf, die an ihrem Umfang mit einer Unwucht 23d ausgestattet ist, und bei der eine pendelnd aufgehängte Masse ein dem Neigungswinkel α gegenüber der Senkrechten proportionales Signal erzeugt. Die Scheibe 23b wird sich infolge ihrer Unwucht 23d stets selbsttätig so justieren, daß der Schwerpunkt der Scheibe eine tiefstmögliche Höhenlage einnimmt. Dadurch erreicht man, daß der Auslenkungswinkel der Masse 23a dem räumlichen Neigungswinkel des Rahmens 21 gleich ist, an dem die Meßeinrichtung 23 angeordnet ist. Der Vorteil der dargestellten Meßeinrichtung 23 liegt darin, daß der räumliche Neigungswinkel α über eine einzige Meßeinrichtung 23 erfaßt werden kann. Selbstverständlich ist der räumliche Neigungswinkel α auch über zwei Meßeinrichtungen zu ermitteln, die nicht drehbar sind und die in zwei im rechten Winkel zueinanderstehenden Ebenen arbeiten.

In Figur 4 ist schematisch eine Wälzlagerung des oberen und unteren Lagerzapfens 1i bzw. 1j dargestellt. Die Wälzkörper 22a, 22b werden in einem Kugelkäfig 22c gehalten und führen den Lagerzapfen 1i, 1j nahezu reibungsfrei innerhalb des Rahmens 21.

Eine alternative Lösung zur Wälzlagerung gemäß Figur 4 zeigt Figur 4a. Der Lagerzapfen 1i, 1j wird über eine Membrane 40 gehalten, die senkrecht zur Lagerungsachse zwischen Rahmen 21 und Lagerzapfen 1j mittels Befestigungsmittel 42 aufgespannt ist. In Richtung der Lagerungsachse ist diese Membrane im Rahmen des minimal erforderlichen Verschiebeweges außerordentlich biegeweich. Sie arbeitet daher ohne nennenswerte rückstellende Kräfte. Senkrecht zur Lagerungsachse ist die Membrane 40 allerdings außerordentlich steif. Der Vorteil einer derartigen Membranlagerung besteht darin, daß das Lager nahezu wartungsfrei arbeitet. Korrosionsprobleme treten nicht auf. Ein hermetischer Abschluß innerhalb des Rahmens 21, wie bei der Ausführungsform gemäß Figur 4, ist nicht erforderlich.

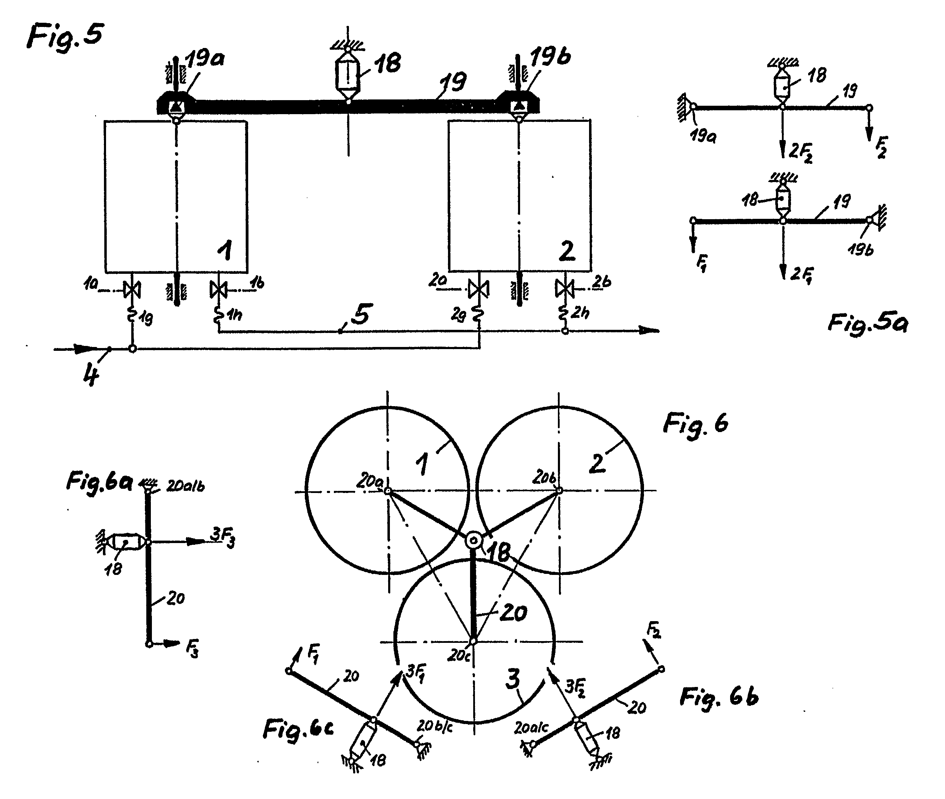

Zwei beidseitig gelagerte Meßbehälter 1, 2 (Figur 5) greifen gemeinsam an einer traversenförmigen Aufhängung 19, an einer mittig angeordneten Wiegezelle 18 an. Steuerbare Arretiervorrichtung 19a, 19b arretieren jeweils die Verbindungsstelle zwischen Meßbehälter 1 bzw. 2 und der Aufhängung 19, und zwar derart, daß die Aufhängung 19 von der Gewichtskraft des arretierten Meßbehälters 1 bzw. 2 entlastet ist. Die Zulaufleitung 4 ist über elastische Rohrleitungsabschnitte 1g, 2g mit dem Meßbehälter 1 bzw. 2 verbunden. Das gleiche gilt für die Ablaufleitung 5, die über elastische Rohrleitungsabschnitte 1h, 2h kraftwirkungsfrei an den Meßbehältern 1 bzw. 2 angeschlossen ist. Die steuerbaren Ventile 1a, 2a und 1b, 2b dienen der Füllung bzw. der Entleerung der Meßbehälter 1, 2.

Die Belastung der Wiegezelle 18 unter der Gewichtskraft $F_1$, $F_2$ des nicht arretierten Meßbehälters 1 bzw. 2 ist schematisch in Figur 5a dargestellt. Die steuerbare Arretiervorrichtung 19a bzw. 19b bildet dabei jeweils das feste Lager für die traversenförmige Aufhängung 19. Der Vorteil einer derartigen Anordnung besteht darin, daß zwei Meßbehälter 1, 2 mit einer Wiegezelle 18 gewogen werden können.

Eine Anordnung gemäß der Erfindung mit drei Meßbehältern 1, 2, 3, die mit einer Wiegezelle 18 auskommt, ist in Figur 6 schematisch dargestellt. Eine sternförmige Aufhängung 20 verbindet die Meßbehälter 1, 2, 3 mit der Wiegezelle 18. Jeder Meßbehälter 1, 2, 3 besitzt im Befestigungspunkt zwischen Meßbehälter und Aufhängung eine Arretiervorrichtung 20a bzw. 20c, die beispielsweise in gleicher Weise arbeitet, wie jene gemäß Figur 5. Durch Arretierung von jeweils zwei Meßbehältern ergeben sich die in den Belastungsskizzen Figur 6a, 6b, 6c dargestellten Kräfteverhältnisse.

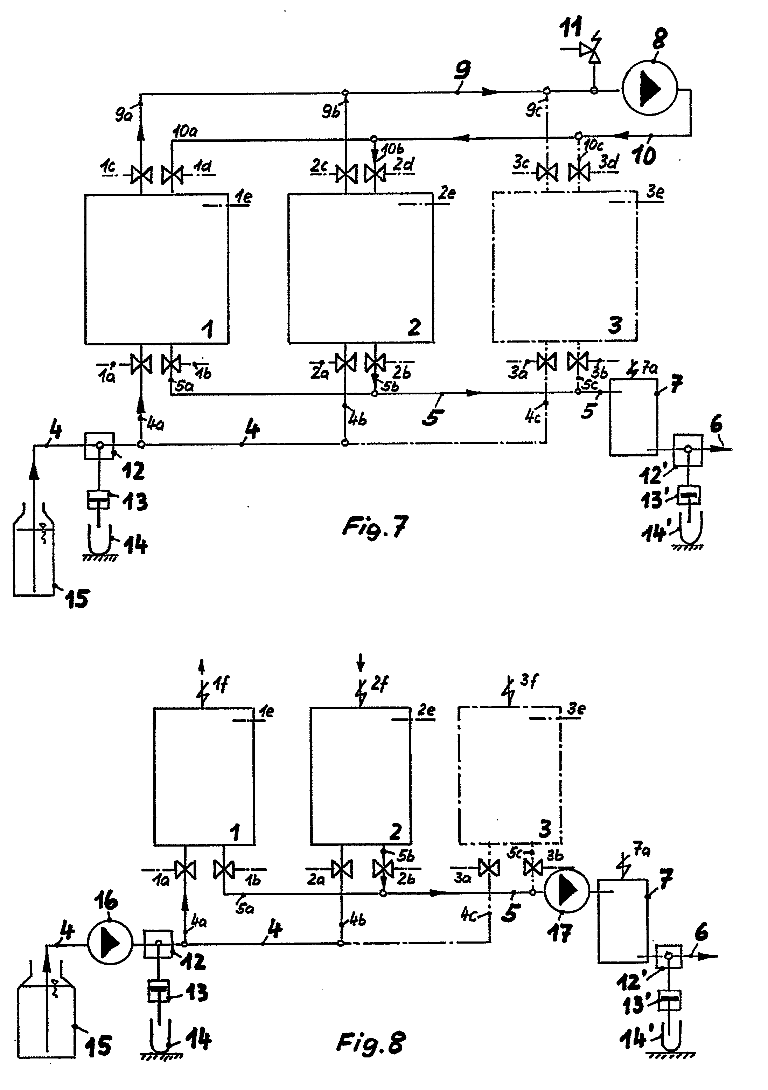

In Figur 7 ist eine erfindungsgemäße Anordnung dargestellt, wobei eine Unterdruckquelle 8 über eine Saugleitung 9 und eine Druckleitung 10 an die Meßbehälter 1, 2, 3 angeschlossen ist. Die Lagerung der Meßbehälter 1, 2, 3 ist nicht näher gezeigt. Die strichpunktierte Darstellung des Meßbehälters 3 soll daran erinnern, daß die Anordnung mit wenigstens zwei Meßbehältern 1, 2 funktionsfähig ist. Die Verbindung der Meßbehälter 1, 2, 3 mit der Saugleitung 9 erfolgt über zugeordnete Saugleitungsabschnitte 9a bzw. 9b bzw. 9c in Verbindung mit jeweils einem steuerbaren Ventil 1c bzw. 2c bzw. 3c. Ebenso ist die Druckleitung 10 über Druckleitungsabschnitte 10a, 10b, 10c und zugeordnete steuerbare Ventile 1d bzw. 2d bzw. 3d mit den Meßbehältern 1 bzw. 2 bzw. 3 verbunden. In gleicher Weise gestaltet sich die Verbindung einer Zulaufleitung 4 zu den einzelnen Meßbehältern 1, 2, 3. In den zugeordneten Zulaufleitungsabschnitten 4a, 4b, 4c befindet sich jeweils ein steuerbares Ventil 1a bzw. 2a bzw. 3a.

Eine Ablaufleitung 5 ist über Ablaufleitungsabschnitt 5a, 5b, 5c und zugeordnete steuerbare Ventile 1b bzw. 2b bzw. 3b an die Meßbehälter 1 bzw. 2 bzw. 3 angeschlosen und mündet in einem dem letzten Meßbehälter 2 bzw. 3 nachgeordneten Gasabscheider und/oder Windkessel 7. Von letzterem führt eine Überführungsleitung 6 beispielsweise in eine nicht dargestellten nachgeordneten Sammeltank oder eine nachgeschaltete Prozeßanlage. Jeder Meßbehälter 1, 2, 3 weist eine den maximalen Füllstand begrenzende Niveausonde 1e bzw. 2e bzw. 3e auf. Eine Mengenteilereinrichtung 12 in Verbindung mit einer Probenabfülleinrichtung 13, mit der eine Flüssigkeitsprobe in eine Probenflasche 14 überführt werden kann, ist entweder vor dem ersten Meßbehälter 1 in der Zulaufleitung 4 oder aber in der Überführungsleitung 6 angeordnet, wobei in letzterer die entsprechenden Einrichtungen mit 12, 13 und 14 bezeichnet sind. Die Zulaufleitung 4 nimmt ihren Anfang beispielsweise in einem Anlieferungsbehälter 15. Vor der Unterdruckquelle 8 ist in der Saugleitung 9 ein unterdruckgesteuertes Belüftungsventil 11 vorgesehen.

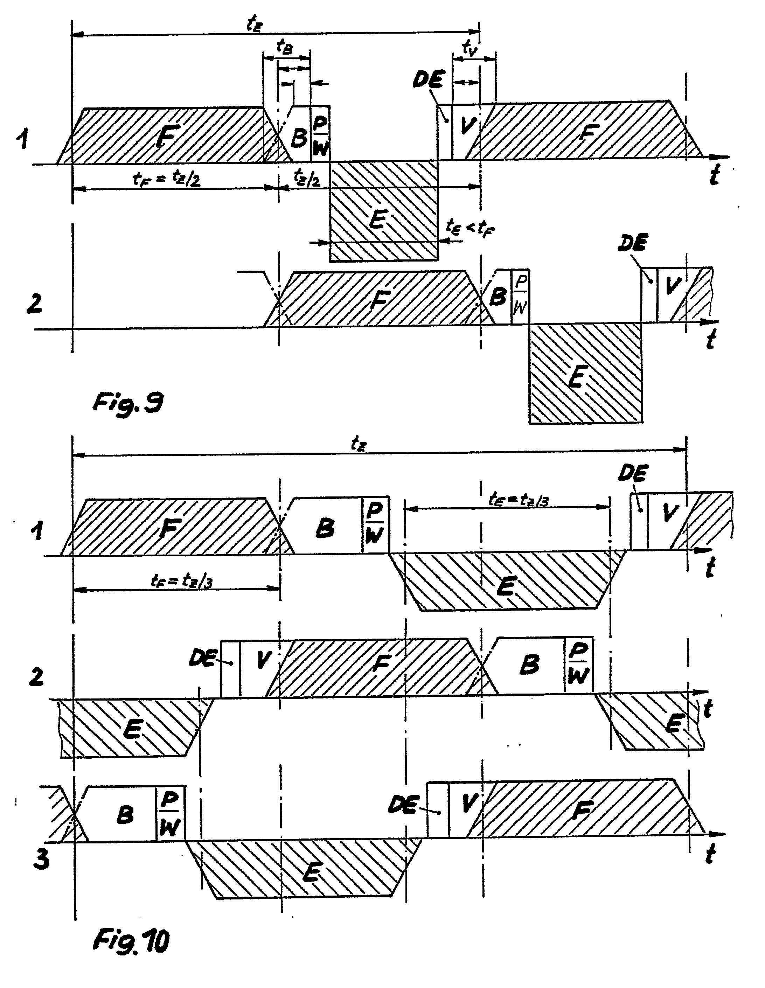

In der Befüllungsphase F (vgl. Figur 9) werden die Meßbehälter 1, 2, 3 jeweils über die Saugleitung 9 und den zugeordneten Saugleitungsabschnitt 9a bzw. 9b bzw. 9c evakuiert. Die steuerbaren Ventile 1c, 2c, 3c sind dabei jeweils geöffnet. Dabei kann die zu überführende Flüssigkeit aus dem Anlieferungsbehälter 15 über die Zulaufleitung 4 in den jeweils in einer Füllphase F befindlichen Meßbehälter 1 bzw. 2 bzw. 3 eintreten. Dazu wird der in Frage kommende Zulaufleitungsabschnitt 4a bzw. 4b bzw. 4c über das zugeordnete steuerbare Ventil 1a bzw. 2a bzw. 3a auf Durchgang geschaltet. Die steuerbaren Ventile 1b, 2b, 3b, 1d, 2d, 3d sind dabei jeweils geschlossen. In der Entleerungsphase E (vgl. Fig. 9) sind die Meßbehälter 1, 2, 3 jeweils mit der Druckleitung 10 und den in Frage kommenden zugeordneten Druckleitungsabschnitten 10a bzw. 10b bzw. 10c verbunden.

Die Ablaufleitung 5 ist über die zugeordneten Ablaufleitungsabschnitte 5a bzw. 5b bzw. 5c und das jeweils zugeordnete steuerbare Ventil 1b bzw. 2b bzw. 3b auf Durchgang geschaltet. Aus dem Ablaufdiagramm nach Figur 9 bzw. Figur 10 erkennt man, in welcher Schaltphase sich z.B. das zugeordnete Ventil das Meßbehälters 2 oder 3 befindet, wenn der Meßbehälter 1 befüllt wird. Die aus einem zu befüllenden Meßbehälter 1, 2, 3 evakuierbare Luft wird auf dem Wege über die Unterdruckquelle 8 und die Druckleitung 10 dazu benutzt, um den jeweils in seiner Entleerungsphase E befindlichen Meßbehälter zu entleeren. Damit stets ausreichend Luft zur Verdrängung von Flüssigkeit aus dem jeweils in Frage kommenden Meßbehälter über die Unterdruckquelle 8 bereitgestellt werden kann, ist in der Saugleitung 9 vor der Unterdruckquelle 8 das unterdruckgesteuerte Belüftungsventil 11 vorgesehen. Sobald ein bestimmten Unterdruck in der Saugleitung 9 erreicht ist, so daß eine ausreichende Luftförderung aus dem jeweils angeschlossenen Meßbehälter nicht mehr sichergestellt ist, gleichzeitig aber ein Luftbedarf im zu entleerenden Meßbehälter vorliegt, spricht das vorgenannte unterdruckgesteuerte Belüftungsventil 11 an und belüftet den in Frage kommenden Abschnitt des Meßsystems über die Atmosphäre.

Figur 8 zeigt eine erfingungsgemäße Anordnung, bei der die Meßbehälter 1, 2, 3 über eine erste Fördereinrichtung 16 in der Zulaufleitung 4 mit Flüssigkeit beschickt werden, während eine zweite Fördereinrichtung 17 deren Entleerung bewirkt. Saug- und Druckleitung und deren zugeordnete Leitungsabschnitte in Verbindung mit steuerbaren Ventilen sind nicht notwendig. Dafür befindet sich an jedem der Meßbehälter 1, 2, 3 jeweils ein druckgesteuertes Druck- und Entlüftungsventil 1f bzw. 2f bzw. 3f. Im übrigen weist die Anordnung den gleichen Aufbau auf, wie jene gemäß Figur 7. Auf dem Luftabscheider und/oder Windkessel 7 ist eine niveaugesteuerte Entlüftungseinrichtung angeordnet. Der Vorteil des sogenannten Pumpensystems gemäß Figur 8 besteht insbesondere darin, daß die Meßbehälter 1, 2, 3 drucklos betrieben werden können, und daß daher keine Zeitverluste für Druckwechsel beim Betrieb der Anordnung auftreten. Der Windkessel 7 sorgt für eine Verbesserung des Gleichförmigkeitsgrades in der Überführungsleitung 6. Falls er gleichzeitig oder alternativ als Gasabscheider ausgebildet ist, kann dadurch beispielsweise die Probenentnahme in der Überführungsleitung 6 verbessert werden, oder es kann aufgrund technologischer Erfordernisse eine Produktschädigung infolge Luft- oder Gasgehalt in der Flüssigkeit (z.B. schädlicher Luftgehalt bei Erhitzungsvorgängen) verhindert werden.

Ein den Verfahrensablauf mittels einer erfindungsgemäßen Anordnung in schematischer Form darstellendes Ablaufdiagramm für ein Meßsystem mit zwei Meßbehältern 1, 2, die im Zulauf quasikontinuierlich beschickt werden, ist in Figur 9 dargestellt. Die Befüllungsphasen F sind um die halbe Zykluszeit $t_Z$ gegeneinander versetzt und gehen ohne Unterbrechung ineinander über. Dadurch ergibt sich eine quasikontinuierliche Strömung in der Zulaufleitung zum Meßsystem. Im Anschluß an die Befüllungsphase F schließt sich eine Beruhigungsphase 8 an. Anschließend wird die Masse der im Meßbehälter 1 vorliegenden Flüssigkeit bestimmt (Meßphase: Wägung P/W).

Es schließt sich die Entleerungsphase E an, wobei die Entleerungszeit $t_E$ kleiner als die Füllzeit $t_F$ ist. Für den Fall, daß das Meßsystem an eine Unterdruckquelle angeschlossen ist, erfolgt nunmehr in der Druckentlastungsphase DE ein Entspannen das Meßehälters 1 bis auf Atmosphärendruck. Anschließend wird in der Evakuierungsphase V der Meßbehälter 1 evakuiert, so daß sich eine erneute Befüllungsphase F anschließen kann. Die Phasenübergänge sind teilsweise idealisiert dargestellt. Da die verwendeten steuerbaren Ventile reales Schaltverhalten aufweisen, ergeben sich stetige Phasenübergänge, die sich in Abhängigkeit von den jeweils vorliegenden Steuerzeiten überschneiden können. Ziel einer Verfahrensoptimierung ist es, den Zulauf der Flüssigkeit zum Meßsystem quasikontinuierlich zu realisieren, und die Entleerungszeit $t_E$ so groß wie möglich zu machen, so daß die Ablaufströmung aus dem Meßsystem einen möglichst kleinen Ungleichförmigkeitsgrad aufweist. Eine Vergrößerung der Entleerungszeit $t_E$ geht stets zu Lasten der Beruhigungs-, Meß-, Druckentlastungs- und Evakuierungsphase, wobei eine Grenze für deren Reduzierung dort zu ziehen ist, wo eine einwandfreie und sichere Messung un der erforderliche Gaswechsel nicht mehr möglich sind.

In Figur 10 ist ein Ablaufdiagramm in schematischer Darstellung für ein Meßsystem mit drei Meßbehältern 1, 2, 3 gezeigt. Die Füllzeit $t_F$ ist ebenso lang wie jene in der Figur 9.

Da die Zykluszeit $t_Z$ jedoch durch die Hereinnahme eines dritten Meßbehälters 3 in das Meßsystem zwangsläufig vergrößert wird, beträgt die Füllzeit $t_F$ nunmehr nur noch ein Drittel der Zykluszeit $t_Z$. Für die übrigen Phasen steht zwangsläufig eine größere Zeitspanne zur Verfügung. Die Entleerungszeit $t_E$ für die Entleerungsphase E ist nunmehr so groß wie die Füllzeit $t_F$, so daß auch der Ablauf der Flüssigkeit aus dem Meßsystem quasikontinuierlich erfolgen kann. Für die Zeiten der Beruhigungs-, Meß-, Druckentlastung- und Evakuierungsphase stehen ebenfalls größere Zeitspannen als beim Verfahren nach Figur 9 zur Verfügung.

Sowohl das Ablaufdiagramm nach Figur 9 als auch jenes nach Figur 10 zeigen, daß die Meßbehälter 1, 2, 3 in zyklischer Reihenfolge befüllt und entleert werden.

## Patentansprüche

1. Anordnung zur Überführung, Massenbestimmung und –abgrenzung von Flüssigkeiten, insbesondere Milch, wobei die Flüssigkeit zum Zwecke einer gravimetrischen Massenbestimmung und –abgrenzung in einen innerhalb eines Rahmens abgestützten Meßbehälter gefördert und dort mittels einer mit dem Meßbehälter verbundenen Wiegezelle gewogen wird, mit einer Zulaufleitung zu dem und einer Ablaufleitung aus dem Meßbehälter zwecks Befüllung bzw. Entleerung desselben und mit einer Fördereinrichtung zur Erzeugung von zum Transport der Flüssigkeit notwendiger Druckdifferenz in der Zulaufleitung, dadurch gekennzeichnet, daß wenigstens zwei Meßbehälter (1; 2; 3) vorgesehen sind, von denen jeder innerhalb des Rahmens (21) in Richtung seiner Lagerungsachse einen axialen Verschiebefreiheitsgrad aufweist, daß die Zu– und Ablaufleitung (4, 4a, 4b, 4c bzw. 5, 5a, 5b, 5c) kraftwirkungsfrei am Meßbehälter entweder dauernd angeschlossen oder anschließbar sind, daß nur die in Richtung der Lagerungsachse des Meßbehälters wirksame Kraftkomponente ($F_H^*$) der Gewichtskraft (F) des Meßbehälters an wenigstens einer Wiegezelle (18) angreift und gemessen und einer Auswerteeinrichtung (24) zugeführt wird, und daß entweder ein gegenüber der Senkrechten gemessener Neigungswinkel der Lagerungsachse ($\pm\alpha$), der über eine Meßeinrichtung (23, 32) erfaßt wird, der Auswerteeinrichtung (24) übermittelt und dort zur Berechnung der Gewichtskraft (F) herangezogen wird oder eine über die Meßeinrichtung (23, 32) in Verbindung mit einem Meßwertumformer (28) steuerbare Verstelleinrichtung (27) am Meßbehälter angreift.

2. Anordnung nach Anspruch 1, dadurch gekennzeichnet, daß für die Lagerung des Meßbehälters (1) Wälzkörper (22a, 22b) vorgesehen sind.

3. Anordnung nach Anspruch 1, dadurch gekennzeichnet, daß für die Lagerung des Meßbehälters (1) Membrane (40) vorgesehen sind, die senkrecht zur Lagerungsachse aufgespannt sind.

4. Anordnung nach einem der Ansprüche 1 bis 3, dadurch gekennzeichnet, daß die Meßeinrichtung (32) eine Referenzmasse (36) aufweist, die adäquat zum Meßbehälter (1) gelagert ist und an einer Wiegezelle (35) angreift.

5. Anordnung nach einem der Ansprüche 1 bis 3, dadurch gekennzeichnet, daß die Meßeinrichtung (23) eine über eine Achse (23c) drehbar gelagerte Scheibe (23b) aufweist, die an ihrem Umfang mit einer Unwucht (23d) ausgestattet ist, und bei der eine pendelnd aufgehängte Masse (23a) ein dem Neigungswinkel $\alpha$ gegenüber der Senkrechten proportionales Signal erzeugt.

6. Anordnung nach einem der Ansprüche 1 bis 5, dadurch gekennzeichnet, daß der Rahmen (21) mit der gesamten Anordnung im wesentlichen ohne eigene Bewegungsfreiheitsgrade verbunden ist.

7. Anordnung nach einem der Ansprüche 1 bis 6, dadurch gekennzeichnet, daß der Rahmen (21) über Feder–/Dämpfungs-Elementen (33) gelagert ist.

8. Anordnung nach einem der Ansprüche 1 bis 7, dadurch gekennzeichnet, daß alle Meßbehälter (1, 2 oder 1, 2, 3) an eine Wiegezelle (18) über eine Aufhängung (19 bzw. 20) in Verbindung mit einer steuerbaren Arretiervorrichtung (19a, 19b bzw. 20a, 20c) anschließbar sind.

9. Anordnung nach einem der Ansprüche 1 bis 8, dadurch gekennzeichnet, daß die Wiegezelle (18) unmittelbar oder mittelbar derart am Meßbehälter (1, 2, 3) angeschlossen ist, daß letzterer entweder an der Wiegezelle (18) hängt oder sich auf dieser abstützt.

10. Anordnung nach einem der Ansprüche 1 bis 9, dadurch gekennzeichnet, daß eine Ablaufleitung (5) in einen dem letzten Meßbehälter nachgeordneten Gasabscheider und/oder Windkessel (7) einmündet, und daß eine Überführungsleitung (6) aus letzterem ausmündet.

11. Anordnung nach einem der Ansprüche 1 bis 10, dadurch gekennzeichnet, daß eine Mengenteilereinrichtung (12 oder 12') in Verbindung mit einer Probenabfülleinrichtung (13 oder 13') in der Zulaufleitung (4) bzw. der Ablaufleitung (5) oder der Überführungsleitung (6) angeordnet sind.

12. Anordnung nach einem der Ansprüche 1 bis 11, dadurch gekennzeichnet, daß eine Unterdruckquelle (8) einerseits saugseitig über eine Saugleitung (9), einen zugeordneten Leitungsabschnitt (9a bzw. 9b bzw. 9c) und ein steuerbares Ventil (1c bzw. 2c bzw. 3c) und andererseits druckseitig über eine Druckleitung (10), einen zugeordneten Druckleitungs-Abschnitt (10a bzw. 10b bzw. 10c) und ein weiteres steuerbares Ventil (1d bzw. 2d bzw. 3d) an die Meßbehälter (1, 2, 3) angeschlossen ist.

13. Anordnung nach einem der Ansprüche 1 bis 12, dadurch gekennzeichnet, daß die Meßbehälter (1, 2, 3) jeweils mit einem druckgesteuerten Be- und Entlüftungsventil (1f bzw. 2f bzw. 3f) versehen sind, und daß den Meßbehältern (1, 2, 3) eine erste Fördereinrichtung (16) innerhalb der Zulaufleitung (4) vor- und eine zweite Fördereinrichtung (17) innerhalb der Ablaufleitung (5) nachgeschaltet sind.

14. Anordnung nach einem der Anprüche 1 bis 13, dadurch gekennzeichnet, daß jeder Meßbehälter (1, 2, 3) in seinem oberen und unteren Bereich mit einer den Flüssigkeitsstand meldenden Sonde (1e, 1k bzw. 2e, 2k, bzw. 3e, 3k) ausgestattet ist.

15. Verfahren mittels einer Anordnung nach einem der Ansprüche 1 bis 14, dadurch gekennzeichnet, daß mit der zu überführenden Flüssigkeit ein mit wenigstens zwei Meßbehältern (1, 2 bzw. 3) ausgestattetes Meßsystem derart beschickt wird, daß die Meßbehälter (1, 2 bis 3) wechselweise bzw. in zyklischer Reihenfolge befüllt und entleert oder teilentleert werden, wobei die Befüllungsphasen F um die halbe bzw. ein Drittel der Zykluszeit $t_Z$ gegeneinander versetzt sind und ohne Unterbrechung ineinander übergehen, und daß die Masse des befüllten und entleerten oder teilentleerten Meßbehälters (1, 2 bzw. 3) bestimmt wird.

## Claims

1. Assembly for the transfer, mass determination and demarcation of fluent material, particularly milk, in which the fluent material is advanced to a metering vessel supported within a frame for the purpose of gravimetric mass determination and demarcation and weighed therein by means of a weighing cell which is connected to the metering vessel, comprising an inlet conduit to and an outlet conduit from the metering vessel for filling or emptying same and comprising an advancing device for generating the pressure difference necessary for the transport of the fluent material in the inlet conduit, characterized in that at least two metering vessels (1; 2; 3) are provided, each of which reveals an axial degree of freedom of displacement within the frame (21) in direction of its support axis, that the inlet conduit and the outlet conduit (4, 4a, 4b, 4c and 5, 5a, 5b, 5c, respectively) are either connected permanently or connectable to the metering vessel without action of force, that only the weight component ($F_H{}^*$) of the weight (F) active in direction of the support axis of the metering vessel acts upon at least one weighing cell (18) and is measured and advanced to an evaluation means (24), and that either an inclination angle of the support axis (±α) measured in view of the vertical which is detected by means of a measuring device (23, 32) is transferred to the evaluation means (24) and used there for the calculation of the weight (F) or that an adjustment means (27) controllable via the measuring device (23, 32) in combination with a measuring value transformer (28) engages the metering vessel.

2. Assembly according to claim 1, characterized in that for the support of the metering vessel (1) antifriction bodies (22a, 22b) are provided.

3. Assembly according to claim 1, characterized in that for the support of the metering vessel (1) diaphragms (40) are provided which are mounted vertically to the support axis.

4. Assembly according to any one of claims 1 to 3, characterized in that the measuring device (32) comprises a referential mass (36) which is journalled equivalently to the metering vessel (1) and engages a weighing cell (35).

5. Assembly according to any one of claims 1 to 3, characterized in that the measuring device (23) comprises a disc (23b) pivoting over an axis (23c), which disc (23b) is provided at its circumference with an unbalanced mass (23d), and at which a pendulous mass (23a) generates a signal proportionate to the angle of inclination α in view of the vertical.

6. Assembly according to any one of claims 1 to 5, characterized in that the frame (21) is connected with the overall assembly substantially without any degrees of freedom of motion of its own.

7. Assembly according to any one of claims 1 to 6, characterized in that the frame (21) is journalled above spring-/stabilizer-elements (33).

8. Assembly according to any one of claims 1 to 7, characterized in that all metering vessels (1, 2 or 1, 2, 3) are connectable to a weighing cell (18) over a suspension (19 or 20) in combination with a controllable locking means (19a, 19b or 20a, 20c).

9. Assembly according to any one of claims 1 to 8, characterized in that the weighing cell (18) is directly or indirectly connected to the metering vessel (1, 2, 3) in a manner that the latter is either suspending from the weighing cell (18) or is supported thereby.

10. Assembly according to any one of claims 1 to 9, characterized in that an outlet conduit (5) enters a gas separator and/or air chamber (7) disposed after the last metering vessel and that a transfer conduit (6) discharges from said gas separator and/or air chamber (7).

11. Assembly according to any one of claims 1 to 10, characterized in that a quantity separating means (12 or 12') is disposed in combination with a sampling device (13 or 13') in the inlet conduit (4) or the outlet conduit (5) or the transfer conduit (6).

12. Assembly according to any one of claims 1 to 11, characterized in that on the one hand a low pressure source (8) is connected to the metering vessel (1, 2, 3) on the suction side via a suction conduit (9), an allocated conduit section ( 9a or 9b or 9c) and a controllable valve (1c or 2c or 3c), and on the other hand it is connected to the metering vessel (1, 2, 3) on the pressure side via a pressure conduit (10), an allocated pressure conduit section (10a or 10b or 10c) and a further controllable valve (1d or 2d or 3d).

13. Assembly according to any one of claims 1 to 12, characterized in that each of the metering vessels (1, 2, 3) is equipped with a pressure-controlled aeration and deaeration, valve (1f or 2f or 3f) and that upstream the metering vessels (1, 2, 3) there is connected a first advancing device (16) within the inlet conduit (4) and downstream the metering vessels (1, 2, 3) there is connected a second advancing device (17) within the outlet conduit (5).

14. Assembly according to any one of claims 1 to 13, characterized in that the upper and the lower area of each metering vessel (1, 2, 3) is equipped with a probe (le, 1k or 2e, 2k, or 3e, 3k) indicating the liquid level.

15. Process by means of an assembly according to any one of claims 1 to 14, characterized in that a metering system equipped with at least two metering vessels (1, 2 and/or 3) is charged with the liquid to be transferred in a manner that the metering vessels (1, 2 to 3) are filled and emptied or partly emptied alternately or in cyclical sequence, the filling phases F being deferred with respect to each other by half or one third of the cycle time $t_z$ and following each other without interruption, and that the mass of the filled and emptied or partially emptied metering vessel (1, 2 and/or 3) is determined.

## Revendications

1. Dispositif destiné au transport ainsi qu'à la définition et à la délimitation de masses de liquides, en particulier de lait, le liquide étant envoyé dans un réservoir de mesure supporté à l'intérieur d'un cadre en vue d'une détermination et d'une délimitation gravimétriques et y étant pesé au moyen d'une cellule de pesée reliée au réservoir de mesure, comportant un conduit d'amenée au réservoir de mesure et un conduit d'évacuation hors de celui-ci, destinés au remplissage et à l'évacuation de ce dernier, et comportant un dispositif de déplacement pour créer dans le conduit d'amenée la différence de pression nécessaire au transport, caractérisé en ce qu'il existe au moins deux réservoirs de mesure (1; 2; 3) dont chacun présente un degré de liberté de mouvement en coulissement axial dans la direction de son axe de logement, en ce que les conduits d'amenée et d'évacuation (4, 4a, 4b, 4c ou 5, 5a, 5b, 5c) sont raccordés de façon durable ou peuvent être raccordés aux réservoirs de mesure sans effet dynamique, en ce que seule la composante de force ($F_H{}^*$) de la force de poids (F) du réservoir de mesure agissant dans la direction de l'axe longitudinal du réservoir de mesure agit sur une cellule de pesée (18) et est mesurée et amenée à un dispositif d'évaluation (24) et en ce que soit un angle d'inclinaison de l'axe de logement (±α), mesuré par rapport à la verticale, qui est saisi par un dispositif de mesure (23, 32), est transmis au dispositif d'évaluation (24) et y est traité en vue du calcul du poids (F), soit un dispositif à déplacement (27), réglable à l'aide du dispositif de mesure (23, 32) en liaison avec un transformateur (28) de valeur de mesure, est actionné par le réservoir de mesure.

2. Dispositif selon la revendication 1, caractérisé en ce qu'il existe des corps tournants (22a, 22b) destinés au logement du réservoir de mesure (1).

3. Dispositif selon la revendication 1, caractérisé en ce qu'il existe, pour le logement du réservoir de mesure (1), des membranes (40) tendues transversalement à l'axe de logement.

4. Dispositif selon l'une des revendications 1 à 3, caractérisé en ce que le dispositif de mesure (32) présente une masse de référence (36) qui est logée de façon appropriée sur le réservoir de mesure (1) et qui agit sur une cellule de pesée (35).

5. Dispositif selon l'une des revendications 1 à 3, caractérisé en ce que le dispositif de mesure (23) présente un disque (23b), comportant sur sa périphérie un bossage non équilibré (23d), et logé à rotation sur un axe (23c), une masse suspendue en pendule (23a) sur ce dernier créant un signal proportionnel à l'angle d'inclinaison α par rapport à la verticale.

6. Dispositif selon l'une des revendications 1 à 5, caractérisé en ce que le cadre (21) est relié à l'ensemble du dispositif sensiblement sans degrés propres de liberté de mouvement.

7. Dispositif selon l'une des revendications 1 à 6, caractérisé en ce que le cadre (21) est logé à l'aide d'éléments (33) à ressorts et amortisseurs.

8. Dispositif selon l'une des revendications 1 à 7, caractérisé en ce que tous les réservoirs de mesure (1, 2 ou 1, 2, 3) peuvent être raccordés à une cellule de pesée (18) au moyen d'une suspension (19 ou 20) en liaison avec un dispositif de butée réglable (19a, 19b ou 20a, 20c).

9. Dispositif selon l'une des revendications 1 à 8, caractérisé en ce que la cellule de pesée (18) est raccordée directement ou indirectement au réservoir de mesure (1, 2, 3) de telle façon que ce dernier soit suspendu à la cellule de pesée (18) ou s'appuie sur celle-ci.

10. Dispositif selon l'une des revendications 1 à 9, caractérisé en ce qu'un conduit d'évacuation (5) débouche dans un séparateur de gaz et/ou un réservoir d'air (7) disposé en aval du dernier réservoir de mesure, et en ce qu'un conduit de transport (6) débouche hors de ce dernier.

11. Dispositif selon l'une des revendications 1 à 10, caractérisé en ce qu'un dispositif de répartition de débit (12 ou 12') est disposé en liaison avec un dispositif de vidage d'échantillons (13 ou 13' ) dans le conduit d'amenée (4) ou le conduit d'évacuation (5) ou le conduit de transport (6).

12. Dispositif selon l'une des revendications 1 à 11, caractérisé en ce qu'une source d'aspiration (8) est reliée aux réservoirs de mesure (1, 2, 3) d'une part sur le côté d'aspiration par un conduit d'aspiration (9), une partie de conduit correspondante (9a, ou 9b, ou 9c) et une valve réglable (1c ou 2c ou 3c) et d'autre part du côté pression par un conduit sous pression (10) une partie de conduit sous pression correspondante (10a, ou 10b, ou 10c) et une autre valve réglable (1d ou 2d ou 3d).

13. Dispositif selon l'une des revendications 1 à 12, caractérisé en ce que les réservoirs de mesure (1, 2, 3) comportent respectivement une valve de ventilation et de désaération commandée par pression (1f ou 2f ou 3f) et en ce qu'un premier dispositif de transport (16) est monté en amont des réservoirs de mesure (1, 2, 3) à l'intérieur du conduit d'amenée (4) et un deuxième dispositif de transport (17) est monté en aval de ces réservoirs à l'intérieur du conduit d'évacuation.

14. Dispositif selon l'une des revendications 1 à 13, caractérisé en ce que chaque réservoir de mesure (1, 2, 3) comporte dans sa zone supérieure ou sa zone inférieure une sonde (1e, 1k ou 2e, 2k ou 3e, 3k) indicatrice du niveau de liquide.

15. Procédé utilisant un dispositif selon l'une des revendications 1 à 14, caractérisé en ce qu'un système de mesure comportant au moins deux réservoirs de mesure (1, 2 ou 3) est rempli du liquide à transporter de telle sorte que les réservoirs de mesure (1, 2 ou 3) soient remplis ou vidés ou partiellement vidés en alternance ou en séquence cyclique, les phases de remplissage (F) étant décalées de la moitié ou d'un tiers du temps de cycle $t_z$ l'une par rapport à l'autre et se suivant l'une l'autre sans interruption, et en ce que l'on détermine la masse du réservoir de mesure (1, 2 ou 3) rempli ou vidé ou partiellement vidé.

Fig.1a

Fig.1

EP 0 235 386 B1

**Fig. 2**

Fig. 3

Fig. 4

Fig. 4a

Fig. 5

Fig. 5a

Fig. 6

Fig. 6a

Fig. 6b

Fig. 6c

EP 0 235 386 B1

Fig.7

Fig.8

EP 0 235 386 B1

Fig. 9

Fig. 10